# EUROPEAN PATENT SPECIFICATION

(11) **EP 3 254 850 B1**
(45) Date of publication and mention of the grant of the patent: **26.06.2019**
(21) Application number: 16746266.2
(22) Date of filing: 14.01.2016
(51) Int. Cl.: B32B 27/30, B32B 27/40, F16C 13/00, G03G 15/00, B32B 25/04, B32B 27/08

(54) **LAMINATE AND ELECTROCONDUCTIVE ROLLER**
LAMINAT UND ELEKTRISCH LEITENDE ROLLE
STRATIFIÉ ET ROULEAU ÉLECTRO-CONDUCTEUR

(30) Priority: 05.02.2015 JP 2015021531
(43) Date of publication of application: 13.12.2017
(73) Proprietor: Bridgestone Corporation, Tokyo 104-8340 (JP)
(72) Inventor: SANO, Takehiro, Tokyo 104-8340 (JP)
(74) Representative: Oxley, Robin John George
(86) International application number: PCT/JP2016/000168
(87) International publication number: WO 2016/125432

(56) References cited:
- JP-A- 2006 023 727
- JP-A- 2008 146 040
- JP-A- 2008 239 833
- DATABASE WPI Week 200972 Thomson Scientific, London, GB; AN 2009-Q19091 XP002776740, & JP 2009 244461 A (TOKAI RUBBER IND LTD) 22 October 2009 (2009-10-22)
- DATABASE WPI Week 200830 Thomson Scientific, London, GB; AN 2008-E37247 XP002776732, & JP 2007 310230 A (TOKAI RUBBER IND LTD) 29 November 2007 (2007-11-29)

## Description

### TECHNICAL FIELD

This disclosure relates to a laminate and a conductive roller.

### BACKGROUND

Conventionally, known is a technique of disposing a UV curable resin on a substrate layer as a surface in a conductive roller having an elastic layer containing polyurethane, in order to suppress toner filming, etc. In the case of using a UV curable resin in the surface, there was a probability that when curing via ultraviolet ray irradiation, cure shrinkage is likely to occur in the surface, and thus a strain occurs between the substrate layer and the surface, leading to deterioration of the adhesiveness between layers.

In order to improve the adhesiveness between the layers, known is a technique of using a urethane acrylate oligomer with a weight average molecular weight of 6,000 or more and acryloylmorpholine in the surface (see, e.g., PTL1).

PTL2 discloses a material for an electrophotographic device and a conductive roll for an electrophotographic device. The material is a cured product of a UV-curable composition which comprises a specific urethane (meth)acrylate oligomer, a (meth)acrylamide, and an initiator. PTL2 aims to prevent cracking of a conductive roll due to improvement in strength.

PTL3 discloses a conductive roll which comprises an outermost layer formed of a cured product of a UV-curable composition containing a UV-curable monomer and/or oligomer, wherein the outermost layer has minute recesses and projections formed on the surface. PTL3 aims to achieve superior toner transferability and discharge performance.

PTL4 discloses a conductive roller which comprises a shaft, an elastic layer formed on the shaft, a specific first resin coating layer on the elastic layer, and a specific second resin coating layer, wherein at least one of the first and second resin coating layers contains an electron beam-cured resin. PTL4 aims to provide a conductive roller having good toner charging ability or photoconductor charging ability to improve image quality.

PTL5 discloses a conductive roll which comprises a layer formed of a UV-curable conductive composition which comprises specific photo-curable monomers and an initiator. PTL5 aims to provide a UV-curable conductive composition which can form a cured product having low hardness and resistance to permanent set by fatigue and excellent uniformity of electric resistance.

PTL6 discloses a conductive roll which comprises a shaft member, an elastic layer formed on the shaft member, a coating layer formed on the elastic layer, wherein the coating layer is formed using a specific UV cured resin. PTL6 aims to provide a conductive roll having improved durability.

### CITATION LIST

### Patent Literature

PTL1 JP2008106840A
PTL2 JP2009244461A
PTL3 JP2007310230A
PTL4 JP2006023727A
PTL5 JP2008239833A
PTL6 JP2008146040A

### SUMMARY

### (Technical Problem)

However, since the hardness of the resin is increased when using acryloylmorpholine, sufficient softness has not been obtained. Then, this disclosure is to provide a laminate with improved adhesiveness between the layers and excellent softness, and a conductive roller which enables sufficient pressing contact when pressed to other members.

### (Solution to Problem)

The laminate of this disclosure is a laminate comprising a substrate layer and at least 2 or more energy ray curable resin layers formed by curing a resin composition with an energy ray, wherein: the laminate has an energy ray curable resin layer (1) which is formed on the substrate layer and an energy ray curable resin layer (2) which is formed on the energy ray curable resin layer (1); and a first resin composition used in formation of the energy ray curable resin layer (1) contains an energy ray curable resin (A) having an ethylene oxide skeleton having two or more ethylene oxide repeating units, the energy ray curable resin (A) comprising at least one of a polyethylene glycol based oligomer, an acrylate represented by general formula (1), and an acrylate represented by general formula (2):

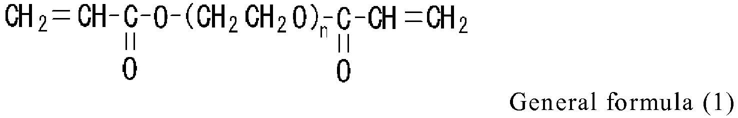

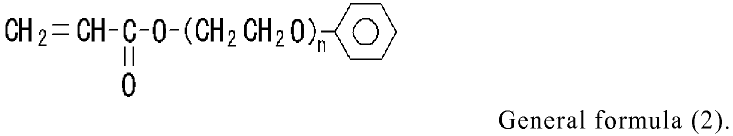

In the present Specification, the "energy ray" refers to ultraviolet ray, visible radiation, near infrared ray, infrared ray, far infrared ray, microwave, electron beam, β ray, γ ray, etc.

In the present Specification, the "ethylene oxide repeating unit" refers to a repeating unit "CH₂CH₂O".

In the present Specification, the "energy ray curable resin (A) having an ethylene oxide skeleton having two or more ethylene oxide repeating units" means that two or more ethylene oxide repeating units are incorporated in the molecule of the energy ray curable resin (A).

In the present Specification, the "energy ray curable resin (B) having a hydrocarbon ring skeleton" means that a hydrocarbon ring is incorporated in the molecule of the energy ray curable resin (B).

In the present Specification, the "surface" refers to a layer disposed on the "substrate (substrate layer)", and a layer disposed on the side opposite to the "substrate (substrate layer)".

### (Advantageous Effect)

According to this disclosure, it is possible to provide a laminate with improved adhesiveness between the layers and excellent softness, and a conductive roller which enables sufficient pressing contact when pressed to other members.

### BRIEF DESCRIPTION OF THE DRAWINGS

FIG. 1 illustrates a cross-sectional view of an embodiment of the laminate of this disclosure; and
FIG. 2 illustrates a cross-sectional view of an embodiment of the conductive roller of this disclosure.

### DETAILED DESCRIPTION

Hereinafter, this disclosure is exemplified in details based on an embodiment thereof.

Here, in the present Specification, "(meth)acryl" is a general term of acryl and methacryl, and "(meth)acrylate" is a general term of acrylate and methacrylate.

### (Laminate)

The laminate of this disclosure at least has an energy ray curable resin layer (1) and an energy ray curable resin layer (2), and further has other layers if necessary.

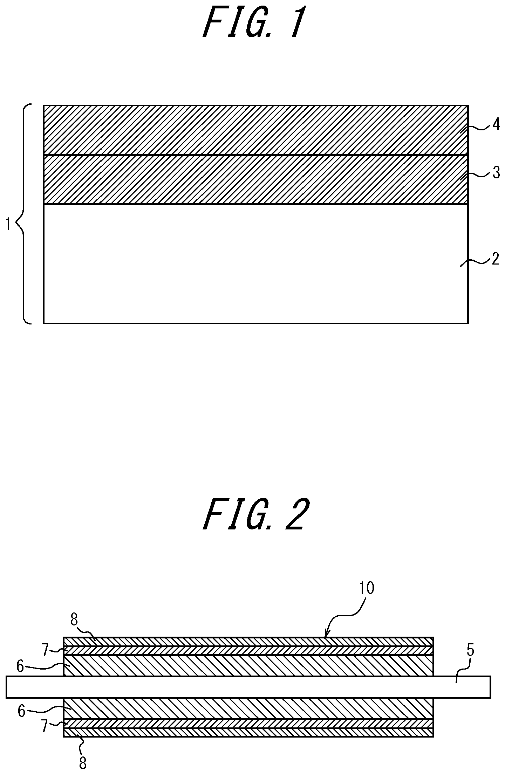

FIG. 1 illustrates a cross-sectional view of an embodiment of the laminate of this disclosure. The laminate 1 as illustrated in FIG. 1 includes: a substrate layer 2; a first energy ray curable resin layer 3 formed adjacent to the substrate layer 2; and a second energy ray curable resin layer 4 different from the first energy ray curable resin layer 3, which is formed adjacent to the first energy ray curable resin layer 3.

Here, the laminate 1 as illustrated in FIG. 1 has the first energy ray curable resin layer 3 and the second energy ray curable resin layer 4 on the substrate layer 2, but may have layers other than these two layers as well. The laminate 1 as illustrated in FIG. 1 has one substrate 2, but may have no substrate 2, or have two or more substrate layers 2.

### <Energy ray curable resin layer (1), energy ray curable resin layer (2)>

The aforementioned energy ray curable resin layers (1) and (2) are both layers formed by curing a resin composition containing an energy ray curable resin. Here, the energy ray curable resin layer (2) is formed on the energy ray curable resin layer (1).

The aforementioned energy ray curable resin layer (1) is a layer formed by curing a first resin composition mentioned below, which contains an energy ray curable resin having an ethylene oxide skeleton, and the aforementioned energy ray curable resin layer (2) is a layer formed by curing a second resin composition mentioned below.

The thickness of the aforementioned energy ray curable resin layer (1) is not specifically limited, and may be appropriately selected depending on the purpose, but is preferably 0.2 to 20 µm, more preferably 0.5 to 10 µm. If the thickness is 0.2 µm or more, it is possible to improve the adhesiveness to the energy ray curable resin layer (2), and if 20 µm or less, there is a tendency that during film formation, defections in the appearance, such as creases, whitening and the like, are unlikely to occur on the coating film. Namely, by setting the thickness of the energy ray curable resin layer (1) within the aforementioned preferable range, the strain due to cure shrinkage is small, and it is possible to improve the adhesiveness to the energy ray curable resin layer (2).

The thickness of the aforementioned energy ray curable resin layer (2) is not specifically limited, and may be appropriately selected depending on the purpose, but is preferably 0.2 to 20 µm, more preferably 0.5 to 10 µm. If the thickness is 0.2 µm or more, it is possible to improve the adhesiveness to the energy ray curable resin layer (1), and if 20 µm or less, there is a tendency that during film formation, defections in the appearance, such as creases, whitening and the like, are unlikely to occur on the coating film. Namely, by setting the thickness of the energy ray curable resin layer (2) within the aforementioned preferable range, the strain due to cure shrinkage is small, and it is possible to improve the adhesiveness to the energy ray curable resin layer (1).

### «First resin composition»

The aforementioned first resin composition contains at least an energy ray curable resin (A), and contains polymer component, energy ray curable resin (B), photo polymerization initiator, organic solvent and other components if necessary.

### -Energy ray curable resin (A)-

The aforementioned energy ray curable resin (A) is not specifically limited and may be appropriately selected depending on the purpose as long as having an ethylene oxide skeleton having two or more ethylene oxide repeating units, and comprising at least one of (A) a polyethylene glycol based oligomer obtained by reacting (i) a polyethylene glycol (PEG) based diol, (ii) an isophorone diisocyanate (IPDI), and (iii) a 2-hydroxy ethyl alcohol (HOA); (B) an acrylate represented with the following general formula (1) (e.g., in the general formula (1), n is principally 14, but is inclusive of values other than 14 as well); (C) an acrylate represented with the following general formula (2) (e.g., in the general formula (2), n is principally 2, but is inclusive of values other than 2 as well), etc. These may be used singly or in a combination of two or more.

Here, the "ethylene oxide repeating unit" refers to "CH₂CH₂O", and the "ethylene oxide skeleton" refers to "-(CH₂CH₂O)ₙ-".

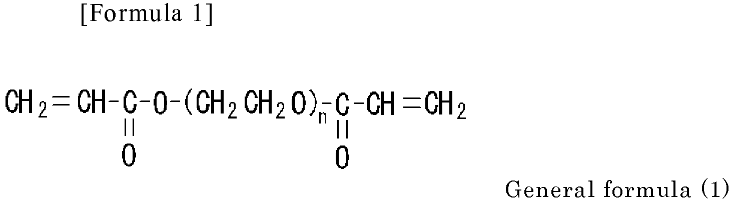

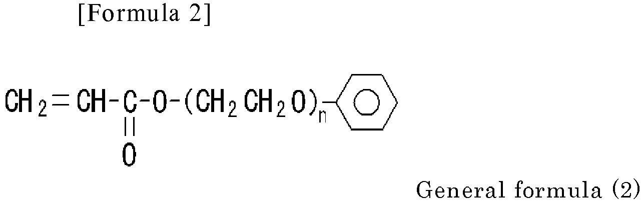

### -Content of energy ray curable resin (A) in first resin composition-

The content of the energy ray curable resin (A) in the aforementioned first resin composition is not specifically limited and may be appropriately selected depending on the purpose, but is preferably 15 parts by mass or more per 100 parts by mass of the polymer component.

If the aforementioned content is 15 parts by mass or more, it is possible to further improve the adhesiveness between the layers and the softness.

### -Polymer component-

The aforementioned polymer component (inclusive of the oligomer component) is not specifically limited and may be appropriately selected depending on the purpose, and is exemplified as urethane (meth)acrylate oligomer, ester based (meth)acrylate oligomer, polycarbonate based (meth)acrylate oligomer, etc.

The weight average molecular weight of the polymer (inclusive of the oligomer) in the polymer component (inclusive of the oligomer component) is not specifically limited and may be appropriately selected depending on the purpose, but 2000 to 20000 is preferable. If the weight average molecular weight is 2000 to 20000, it is beneficial from the viewpoint of softness.

### --Urethane (meth)acrylate oligomer--

The aforementioned urethane (meth)acrylate oligomer is not specifically limited and may be appropriately selected depending on the purpose, as long as an oligomer having one or more acryloyl groups (CH₂=CHCO- or CH₂=C(CH₃)CO-) and having one or more urethane bonds (-NHCOO-) in each molecule, and is exemplified as polybutadiene based urethane (meth)acrylate oligomer, carbonate based urethane (meth)acrylate oligomer, ester based urethane (meth)acrylate oligomer, ether based urethane (meth)acrylate oligomer, etc. These may be used singly or in a combination of two or more.

### --Ester based (meth)acrylate oligomer--

The aforementioned ester based (meth)acrylate oligomer is not specifically limited and may be appropriately selected depending on the purpose, as long as an oligomer having one or more ester bonds (-COO-) in each molecule, and is exemplified as compounds of which the main skeleton and an acrylate are bonded via an ester, through a reaction other than urethane reaction.

### --Polycarbonate based (meth)acrylate oligomer--

The aforementioned polycarbonate based (meth)acrylate oligomer is not specifically limited and may be appropriately selected depending on the purpose, as long as an oligomer having one or more carbonate groups (-O-(C=O)-O-) in each molecule.

### -Energy ray curable resin (B)-

The aforementioned energy ray curable resin (B) is not specifically limited and may be appropriately selected as long as having a hydrocarbon ring skeleton in the molecule, and is exemplified as a methacrylate represented with the following structural formula (1), and an acrylate represented with any one among the following structural formula (2), the following general formula (3), and the following structural formula (4), etc.

Here, it is preferable that the hydrocarbon ring skeleton is incorporated with a covalent bond in the molecule of the energy ray curable resin (B).

Moreover, here, one energy ray curable resin having both the aforementioned ethylene oxide skeleton having two or more ethylene oxide repeating units and the aforementioned hydrocarbon ring skeleton may be used instead of both the energy ray curable resin (A) and the energy ray curable resin (B).

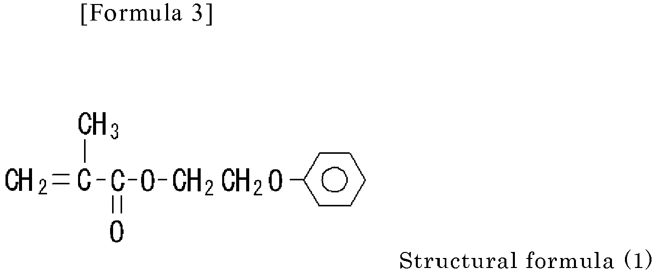

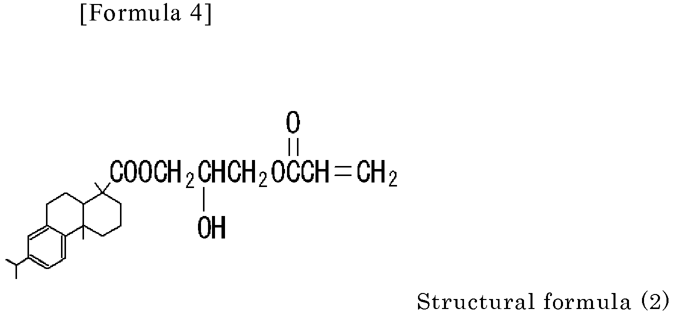

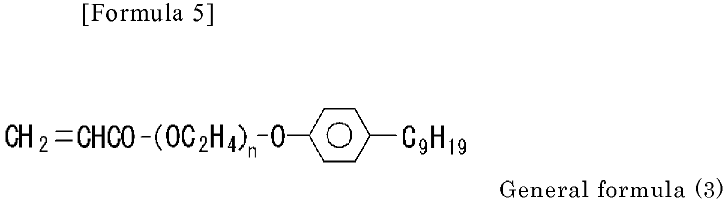

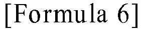

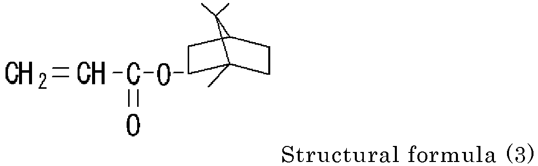

### --Hydrocarbon ring skeleton--

The structure, number of rings, etc. of the aforementioned hydrocarbon ring skeleton is not specifically limited and may be appropriately selected depending on the purpose as long as being a ring structure formed of hydrocarbon, and is exemplified as phenyl group, norbornene group, adamantly group, bisphenol group, cyclohexyl group, etc.

The number of carbon atoms in the aforementioned hydrocarbon ring skeleton is not specifically limited and may be appropriately selected depending on the purpose as long as being 3 or more, which is necessary for forming a ring, but 6 is preferable.

If the aforementioned number of carbon atoms is 6, it is possible to further improve the adhesiveness between the layers.

### --Content of energy ray curable resin (B) in first resin composition-

The content of the energy ray curable resin (B) in the aforementioned first resin composition is not specifically limited and may be appropriately selected depending on the purpose, but 100 parts by mass or less per 100 parts by mass of the polymer component is preferable.

If the aforementioned content is 100 parts by mass or less, it is possible to improve the adhesiveness while maintaining desirable softness.

### -Photo polymerization initiator-

By using the aforementioned photo polymerization initiator, it is possible to initiate the polymerization reaction with light.

The aforementioned photo polymerization initiator is not specifically limited and may be appropriately selected depending on the purpose, and is exemplified as 4-dimethylamino benzoic acid; 4-dimethylamino benzoate; 2,2-dimethoxy-2-phenylacetophenone; acetophenone diethyl ketal; alkoxyacetophenone; benzyl dimethyl ketal; benzophenone derivatives such as benzophenone, 3,3-dimethyl-4-methoxybenzophenone, 4,4-dimethoxybenzophenone, 4,4-diaminobenzophenone and the like; alkyl benzoylbenzoate; bis(4-dialkylaminophenyl)ketone; benzyl derivatives such as benzyl, benzyl methyl ketal and the like; benzoin derivatives such as benzoin, benzoin isobutyl ether, benzoin isopropyl ether and the like; 2-hydroxy-2-methylpropiophenone; 1-hydroxycyclohexyl phenyl keton; xanthone derivatives such as xanthone, thioxanthone and the like; fluorene; 2,4,6-trimethylbenzoyldiphenylphosphine oxide; bis(2,6-dimethoxybenzoyl)-2,4,4-trimethylpentylphosphine oxide; bis(2,4,6-trimethylbenzoyl)-phenylphosphine oxide; 2-methyl-1-(4-methylthiophenyl)-2-morpholinopropane-1-one (Irgacure.907); 2-benzyl-2-dimethylamino-1-(morpholinophenyl)-butanone-1, etc. These may be used singly or in a combination of two or more.

The compounding amount of the aforementioned photo polymerization initiator is not specifically limited and may be appropriately selected depending on the purpose, while 0.2 to 5 parts by mass per 100 parts by mass of the polymer component is preferable.

If the aforementioned content is within the preferable range, it is beneficial from the viewpoint of prevention of curing failure.

### -Organic solvent-

By using the aforementioned organic solvent, it is possible to achieve adjustment of solid component concentration, improvement of dispersion stability, improvement of coating properties, improvement of adhesiveness to the substrate, etc.

The aforementioned organic solvent is not specifically limited and may be appropriately selected depending on the purpose, and is exemplified as solvents such as alcohols, ketones, ethers, esters, cellosolves, aromatic compounds and the like.

Specifically, the aforementioned organic solvent is not specifically limited and may be appropriately selected depending on the purpose, and is exemplified as methanol, ethanol, 1-propanol, 2-propanol, 1-butanol, 2-butanol, isobutyl alcohol, t-butyl alcohol, benzyl alcohol, 2-methoxyethanol, 2-ethoxyethanol, 2-(methoxymethoxy)ethanol, 2-butoxyethanol, furfuryl alcohol, tetrahydrofurfuryl alcohol, diethylene glycol, diethylene glycol monomethyl ether, diethylene glycol monoethyl ether, diethylene glycol monobutyl ether, 1-methoxy-2-propanol, 1-ethoxy-2-propanol, dipropylene glycol, dipropylene glycol monomethyl ether, dipropylene glycol monoethyl ether, tripropylene glycol monomethyl ether, diacetone alcohol, acetone, methyl ethyl ketone, 2-pentanone, 3-pentanone, 2-hexanone, methyl isobutyl ketone, 2-heptanone, 4-heptanone, diisobutyl ketone, cyclohexanone, methylcyclohexanone, acetophenone, diethyl ester, dipropyl ether, diisopropyl ether, dibutyl ether, dihexyl ether, anisole, phenetole, tetrahydrofuran, tetrahydropyran, 1,2-dimethoxyethane, 1,2-diethoxyethane, 1,2-dibutoxyethane, diethylene glycol dimethyl ether, diethylene glycol diethyl ether, diethylene glycol dibutyl ether, glycerin ether, methyl acetate, ethyl acetate, propyl acetate, isopropyl acetate, butyl acetate, isobutyl acetate, sec-butyl acetate, pentyl acetate, isopentyl acetate, 3-methoxybutyl acetate, 2-ethylbutyl acetate, 2-ethylhexyl acetate, methyl propionate, ethyl propionate, butyl propionate, γ-butyrolactone, 2-methoxyethyl acetate, 2-ethoxyethyl acetate, 2-butoxyethyl acetate, 2-phenoxyethyl acetate, diethylene glycol monoethyl ether acetate, diethylene glycol monobutyl ether acetate, benzene, toluene, xylene, propylene glycol monomethyl ether acetate, etc. These may be used singly or in a combination of two or more. Among these, butyl acetate and propylene glycol monomethyl ether acetate are beneficial from the viewpoint of environment and solubility.

### -Other components-

The other components contained in the aforementioned first resin composition if necessary are not specifically limited and may be appropriately selected depending on the purpose, and are exemplified as catalyst, foam stabilizer, microparticle, ionic conductive agent, filler, peptizing agent, foaming agent, plasticizer, softener, tackifier, antitack agent, separating agent, release agent, extending agent, colorant, crosslinking agent, vulcanizing agent, polymerization inhibitor, etc. These may be used singly or in a combination of two or more.

By curing the aforementioned first resin composition, the energy ray curable resin layer (1) is obtained. The method for forming films is not specifically limited and may be appropriately selected depending on the purpose, and is exemplified as conventionally known coating methods, such as curtain coating, printing and the like. Further, by radiating an energy ray on the coated first resin composition (e.g., coating film), it is possible to obtain the energy ray curable resin layer (1) (e.g., cured film).

The aforementioned energy ray for curing the first resin composition is not specifically limited and may be appropriately selected depending on the purpose, and is exemplified as ultraviolet ray, visible radiation, near infrared ray, infrared ray, far infrared ray, microwave, electron beam, β ray, γ ray and the like. These may be used singly or in a combination of two or more. Among these, ultraviolet ray and visible radiation are preferable from the viewpoint of higher polymerization rate by using in a combination with photosensitive radical polymerization initiator, and comparatively less deterioration in the substrate. Specific light source of the aforementioned energy ray is not specifically limited, and may be appropriately selected depending on the purpose, and is exemplified as low pressure mercury lamp, medium pressure mercury lamp, high pressure mercury lamp, extra-high pressure mercury lamp, fusion lamp, incandescent light bulb, xenon lamp, halogen lamp, carbon arc lamp, metal halide lamp, fluorescent lamp, tungsten lamp, gallium lamp, excimer laser, the sun, etc. It is preferable that the aforementioned energy ray is radiated at an irradiation energy such that an integrated energy of a wavelength of 200 to 600 nm is 0.05 to 10 J/cm². The irradiation atmosphere of the energy ray may be air, or an inactive gas such as nitrogen, argon and the like.

### «Second resin composition»

The aforementioned second resin composition at least contains a resin component, and contains photo polymerization initiator, organic solvent and other components if necessary.

### -Resin component-

The aforementioned resin component is not specifically limited and may be appropriately selected depending on the purpose as long as an energy ray curable resin, and is exemplified as energy ray curable resin having fluorine atom, energy ray curable resin having silicon atom, oligomers such as urethane (meth)acrylate oligomer, ester based (meth)acrylate oligomer, polycarbonate based (meth)acrylate oligomer and the like; monomer; etc.

### --Energy ray curable resin having fluorine atom--

The aforementioned energy ray curable resin having fluorine atom is not specifically limited and may be appropriately selected depending on the purpose, and is exemplified as fluorine-containing UV reactive surface modifier ("Megafac RS-72-K", made by DIC Corporation, "CHEMINOX FAAC-6", made by Unimatec Co., Ltd., etc.), etc.

### --Energy ray curable resin having silicon atom--

The aforementioned energy ray curable resin having silicon atom is not specifically limited and may be appropriately selected depending on the purpose, and is exemplified as silicone compound having acryl groups on both terminals and side chains ("X-22-2457", made by Shin-Etsu Chemical Co., Ltd., "BYK3500", made by BYK Japan K.K., etc.), etc.

### --Urethane (meth)acrylate oligomer--

The urethane (meth)acrylate oligomer in the second resin composition is the same as the urethane (meth)acrylate oligomer in the first resin composition.

### --Ester based (meth)acrylate oligomer--

The ester based (meth)acrylate oligomer in the second resin composition is the same as the ester based (meth)acrylate oligomer in the first resin composition.

### --Polycarbonate based (meth)acrylate oligomer--

The polycarbonate based (meth)acrylate oligomer in the second resin composition is the same as the polycarbonate based (meth)acrylate oligomer in the first resin composition.

### --Monomer--

The monomer is not specifically limited and may be appropriately selected depending on the purpose, and is exemplified as (meth)acrylate or vinyl ether having functional groups such as hydrocarbon, ester, carboxylic acid, hydroxyl group, amino group, heterocycle and the like; (meth)acrylate or vinyl ether having phosphorus atom, silicon atom, fluorine atom, bromine atom, chlorine atom, transition metal atom and the like, etc.

### -Photo polymerization initiator-

The photo polymerization initiator in the second resin composition is the same as the photo polymerization initiator in the first resin composition.

The compounding amount of the photo polymerization initiator is not specifically limited and may be appropriately selected depending on the purpose, while 0.2 to 5 parts by mass per 100 parts by mass of the polymer is preferable.

If the content is within the preferable range, it is beneficial from the viewpoint of prevention of curing failure.

### -Organic solvent-

The organic solvent in the second resin composition is the same as the organic solvent in the first resin composition.

The content in the organic solvent is not specifically limited, and may be appropriately selected depending on the purpose.

### -Other components-

The other components in the second resin composition are the same as the other components in the first resin composition.

By curing the aforementioned second resin composition, the energy ray curable resin layer (2) is obtained. The method for forming films is not specifically limited and may be appropriately selected depending on the purpose, and is exemplified as conventionally known coating methods, such as curtain coating, printing and the like. Further, by radiating an energy ray on the coated second resin composition (e.g., coating film), it is possible to obtain the energy ray curable resin layer (2) (e.g., cured film).

The aforementioned energy ray for curing the second resin composition is not specifically limited and may be appropriately selected depending on the purpose, and is exemplified as ultraviolet ray, visible radiation, near infrared ray, infrared ray, far infrared ray, microwave, electron beam, β ray, γ ray and the like. These may be used singly or in a combination of two or more. Among these, ultraviolet ray and visible radiation are preferable from the viewpoint of higher polymerization rate by using in a combination with photosensitive radical polymerization initiator, and comparatively less deterioration in the substrate. Specific light source of the aforementioned energy ray is not specifically limited, and may be appropriately selected depending on the purpose, and is exemplified as low pressure mercury lamp, medium pressure mercury lamp, high pressure mercury lamp, extra-high pressure mercury lamp, fusion lamp, incandescent light bulb, xenon lamp, halogen lamp, carbon arc lamp, metal halide lamp, fluorescent lamp, tungsten lamp, gallium lamp, excimer laser, the sun, etc. It is preferable that the aforementioned energy ray is radiated at an irradiation energy such that an integrated energy of a wavelength of 200 to 600 nm is 0.05 to 10 J/cm². The irradiation atmosphere of the energy ray may be air, or an inactive gas such as nitrogen, argon and the like.

### <Other layers>

The other layers of the laminate of this disclosure if necessary is not specifically limited and may be appropriately selected depending on the purpose, and is exemplified as substrate layer as a substrate, adhesive layer, reinforcement layer, buffer layer, etc. These may be used singly or in a combination of two or more.

### -Substrate layer-

The shape of the substrate layer is not specifically limited, and may be appropriately selected depending on the purpose.

The material of the substrate layer is not specifically limited and may be appropriately selected depending on the purpose, and is exemplified as energy ray curable resin, metal, ceramic, thermoplastic plastic, thermoplastic elastomer, thermosetting plastic, silicone, urethane resin, etc. These may be used singly or in a combination of two or more.

According to the laminate of this disclosure, it is possible to obtain a laminate with improved adhesiveness between the layers and excellent softness.

Here, the mechanism to obtain adhesiveness is unclear, but it is assumed that since one layer of the laminate is a layer formed by curing a resin composition containing an energy ray curable resin having an ethylene oxide skeleton, the resin stacked on this layer becomes likely to cohere with this layer (the reasons are: (i) improvement of the wettability of this layer; (ii) increase of the intermolecular force because that this layer has a large amount of hydrogen, etc.), and thus adhesiveness is obtained. Moreover, if the energy ray curable resin has an ethylene oxide skeleton, the resin obtained by curing the energy ray curable resin becomes soft, while enables achievement of both adhesiveness and softness.

In the laminate of this disclosure, if the first resin composition contains an energy ray curable resin (B) having a hydrocarbon ring skeleton, it is possible to obtain a laminate with further improved adhesiveness between the layers.

In the laminate of this disclosure, if the first resin composition further contains a polymer component, and a content of the energy ray curable resin (A) in the first resin composition is 15 parts by mass or more per 100 parts by mass of the polymer component, it is possible to further improve the adhesiveness between the layers and the softness.

In the laminate of this disclosure, if the first resin composition further contains a polymer component, and a content of the energy ray curable resin (B) in the first resin composition is 100 parts by mass or less per 100 parts by mass of the polymer component, it is possible to improve the adhesiveness while maintaining desirable softness.

In the laminate of this disclosure, if the energy ray curable resin layer (2) is an outermost layer, and the second resin composition used in formation of the energy ray curable resin layer (2) contains at least either one among an energy ray curable resin having fluorine atom and an energy ray curable resin having silicon atom, it is possible to relax external factors such as abrasion and the like.

### <Method for producing laminate>

The production method for producing the laminate of this disclosure preferably includes at least a first coating process, a first layer formation process, a second coating process, and a second layer formation process, and contains other processes if necessary.

In an embodiment of the laminate of this disclosure, it is preferable that the energy ray curable resin layer (1) is substantively completely cured before film formation of the energy ray curable resin layer (2), while it is possible as well to form the energy ray curable resin layer (2) on the energy ray curable resin layer (1) which is at a half-cured state, and then simultaneously cure the energy ray curable resin layer (1) and the energy ray curable resin layer (2) by radiating an energy ray.

### «First coating process»

The aforementioned first coating process is a process for coating the first resin composition on the substrate.

The coating method is exemplified as dip coating, die coating, spin coating, bar coating, spray coating, roll coating, curtain coating, printing, etc. These may be used singly or in a combination of two or more.

### «First layer formation process»

The aforementioned first layer formation process is a process for curing the first resin composition coated on the substrate by radiating an energy ray, to form the energy ray curable resin layer (1).

The aforementioned energy ray is exemplified as ultraviolet ray, visible radiation, near infrared ray, infrared ray, far infrared ray, microwave, electron beam, β ray, γ ray, etc. These may be used singly or in a combination of two or more. Moreover, in the case of using a plurality of different energy rays, the irradiation may be performed simultaneously or in order.

Specific light source of the aforementioned energy ray is not specifically limited, and may be appropriately selected depending on the purpose, and is exemplified as low pressure mercury lamp, medium pressure mercury lamp, high pressure mercury lamp, extra-high pressure mercury lamp, incandescent light bulb, xenon lamp, halogen lamp, carbon arc lamp, metal halide lamp, fluorescent lamp, tungsten lamp, gallium lamp, excimer laser, the sun, etc.

The irradiation energy of the aforementioned energy ray is not specifically limited and may be appropriately selected depending on the purpose, but is preferably radiated such that an integrated energy of a wavelength of 200 to 600 nm is 0.05 to 10 J/cm².

The irradiation atmosphere of the energy ray is not specifically limited and may be appropriately selected depending on the purpose, and is exemplified as air, or an inactive gas such as nitrogen, argon and the like.

### «Second coating process»

The aforementioned second coating process is a process for coating the second resin composition on the cured energy ray curable resin layer (1).

The coating method is as mentioned above.

### «Second layer formation process»

The aforementioned second layer formation process is a process for curing the first resin composition coated on the energy ray curable resin layer (1) by radiating an energy ray, to form the energy ray curable resin layer (2).

Irradiation of the energy ray is as mentioned above.

### (Conductive roller)

The conductive roller of this disclosure has the laminate of this disclosure.

An embodiment of the conductive roller of this disclosure includes at least a shaft, and the aforementioned laminate formed on the shaft. The conductive roller of this disclosure may be produced with a well-known method.

FIG. 2 illustrates a cross-sectional view of an embodiment of the conductive roller of this disclosure. The conductive roller 10 as illustrated in FIG. 2 includes a shaft 5 installed in a manner held at both longitudinal end portions as an axis, and an elastic layer 6 (corresponding to the substrate layer 2 of the laminate in FIG. 1) disposed on a radial outer side of the shaft 5. Here, the conductive roller 10 as illustrated in FIG. 2 has one elastic layer 6, but may have two or more elastic layers as well. Moreover, the conductive roller 10 as illustrated in FIG. 2 has on a radial outer side of the elastic layer 6 an intermediate layer 7 (corresponding to the first energy ray curable resin layer 3 of the laminate in FIG. 1) and an outermost layer 8 (corresponding to the second energy ray curable resin layer 4 of the laminate in FIG. 1), but may have other layers other than these 2 layers.

The type of the conductive roller of this disclosure is not specifically limited and may be appropriately selected depending on the purpose, and is exemplified as charging roller, toner supply roller, developing roller, transfer roller, cleaning roller, fixing roller, etc.

Among these, charging roller and developing roller particularly demands adhesiveness to coating films, and thus the effect of this disclosure is necessary.

### <Shaft>

The aforementioned shaft is not specifically limited and may be appropriately selected depending on the purpose as long as having excellent conductivity, and is exemplified as metallic hollow cylinder, resin hollow cylinder, metallic solid cylinder, resin solid cylinder, etc.

According to the conductive roller of this disclosure, it is possible to achieve sufficient pressing contact when pressed to other members.

### EXAMPLES

Hereinafter, this disclosure is further described in details by referring to examples, while this disclosure is not limited to the following examples, but may be performed by varying within the scope of the subject thereof.

The laminate was produced with the following method.

### (Examples 1 to 14 and Comparative Examples 1 to 6)

### <Preparation of first resin composition>

(i) Use a urethane acrylate oligomer (trade name: NX44-31, made by Asia Industry Co., Ltd.) or an ester based oligomer synthesized with the following synthesis method 1 as the polymer component;
(ii) use as the energy ray curable resin (A) any one among: a polyethylene glycol (PEG) based oligomer 1 synthesized with the following synthesis method 2; a polyethylene glycol (PEG) based oligomer 2 synthesized with the following synthesis method 3; an acrylate represented with the following general formula (1) (in the general formula (1), n is principally 14, but is inclusive of values other than 14 as well); and an acrylate represented with the following general formula (2) (in the general formula (2), n is principally 2, but is inclusive of values other than 2 as well);
(iii) use a (meth)acrylate represented with any one of the following structural formulae (1) to (3) and the general formula (3) (n=4 in the general formula (3)) as the energy ray curable resin (B);
(iv) use a 2-methyl-1-(4-methylthiophenyl)-2-morpholinopropane-1-one (trade name: Irgacure.907, made by BASF) as the photo polymerization initiator; and
(v) use an acrylamide represented with the following structural formula (4) or a (meth)acrylate represented with any one of the following structural formulae (5) to (8) as other components,
to prepare the first resin composition at the compounding amount as shown in the following Tables 1 and 2.

### <<Synthesis method 1>>

First, a lactone based (aliphatic polyester) diol (molecular weight: 2000, trade name: Plaxel 220AL, made by Daicel Corporation), an isophorone diisocyanate (IPDI) (made by Evonik Corporation), and a propylene glycol monomethyl ether acetate (PMA) (made by Sankyo Chemical Co.,Ltd.) as a solvent were mixed with a planetary mixer at 70°C for 10 minutes. Then, a tin catalyst (trade name: U-100, made by Nitto Kasei Co., Ltd.) was added by 0.1 w% with respect to the diol, and mixed at 70°C. After certifying per one hour that the theoretical peak area of isocyanate has been approached in infrared absorption (IR) spectrum, a 2-hydroxyethyl alcohol (HOA)(trade name: Light Ester HOA, made by Kyoeisha Chemical Co., Ltd.) was added. Further, after certifying that the peak of isocyanate in infrared absorption (IR) spectrum has disappeared, the synthesis was terminated.

Here, an "isocyanate index", which is an index calculated with [number of isocyanate groups (-NCO) in isocyanate group containing compound]/[number of (-OH) groups in polyol], was 1.8.

### <<Synthesis method 2>>

First, a polyethylene glycol (PEG) based diol (trade name: Toho Polyol PB5064, made by Toho Chemical Industry Co., Ltd.), an isophorone diisocyanate (IPDI) (made by Evonik Corporation), and a propylene glycol monomethyl ether acetate (PMA) (made by Sankyo Chemical Co.,Ltd.) as a solvent were mixed with a planetary mixer at 70°C for 10 minutes. Then, a tin catalyst (trade name: U-100, made by Nitto Kasei Co., Ltd.) was added by 0.1 w% with respect to the diol, and mixed at 70°C. After certifying per one hour that the theoretical peak area of isocyanate has been approached in infrared absorption (IR) spectrum, a 2-hydroxyethyl alcohol (HOA)(trade name: Light Ester HOA, made by Kyoeisha Chemical Co., Ltd.) was added. Further, after certifying that the peak of isocyanate in infrared absorption (IR) spectrum has disappeared, the synthesis was terminated.

Here, an "isocyanate index", which is an index calculated with [number of isocyanate groups (-NCO) in isocyanate group containing compound]/[number of (-OH) groups in polyol], was 1.8.

### <<Synthesis method 3>>

First, a polyethylene glycol (PEG) based diol (trade name: Toho Polyol PB4000, made by Toho Chemical Industry Co., Ltd.), an isophorone diisocyanate (IPDI) (made by Evonik Corporation), and a propylene glycol monomethyl ether acetate (PMA) (made by Sankyo Chemical Co.,Ltd.) as a solvent were mixed with a planetary mixer at 70°C for 10 minutes. Then, a tin catalyst (trade name: U-100, made by Nitto Kasei Co., Ltd.) was added by 0.1 w% with respect to the diol, and mixed at 70°C. After certifying per one hour that the theoretical peak area of isocyanate has been approached in infrared absorption (IR) spectrum, a 2-hydroxyethyl alcohol (HOA)(trade name: Light Ester HOA, made by Kyoeisha Chemical Co., Ltd.) was added. Further, after certifying that the peak of isocyanate in infrared absorption (IR) spectrum has disappeared, the synthesis was terminated.

Here, an "isocyanate index", which is an index calculated with [number of isocyanate groups (-NCO) in isocyanate group containing compound]/[number of (-OH) groups in polyol], was 1.8.

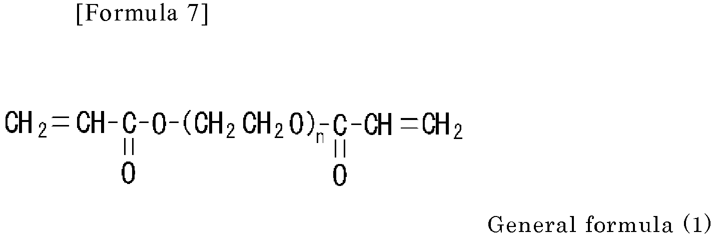

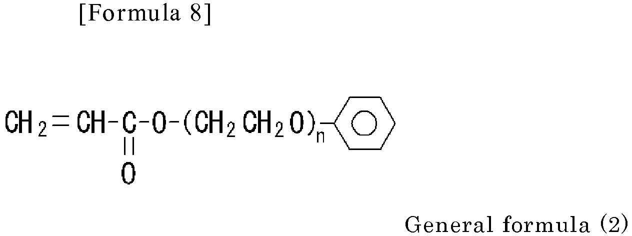

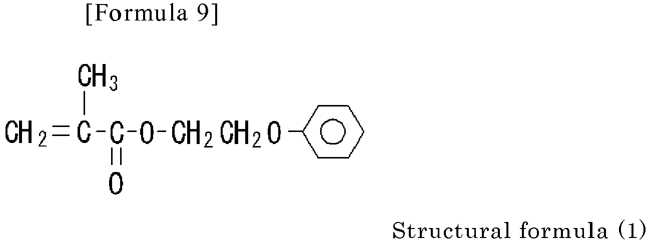

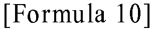

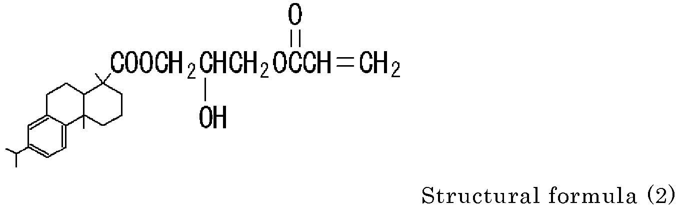

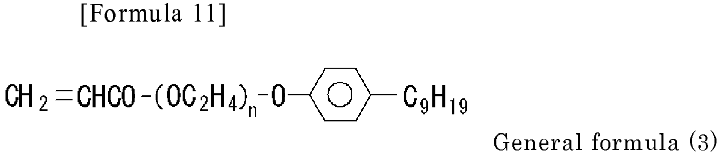

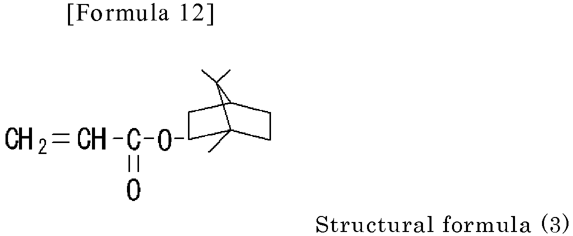

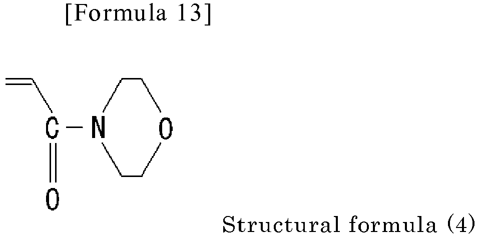

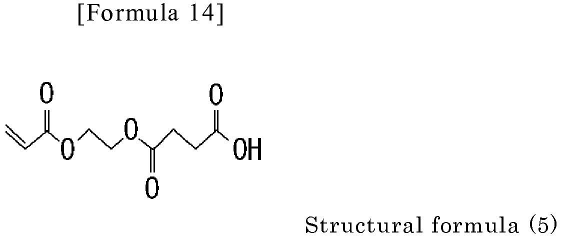

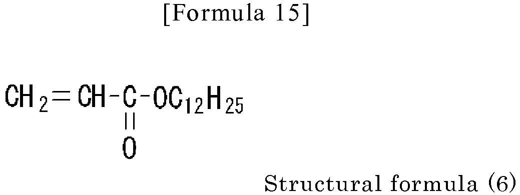

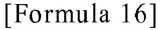

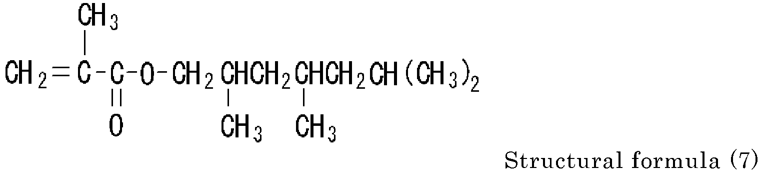

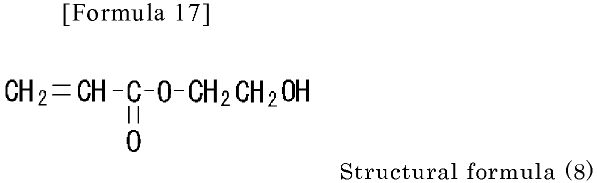

### <Preparation of second resin composition>

(i) Use as the resin component either one among: a polypropylene glycol (PPG) based oligomer synthesized with the following synthesis method 4, an ester based oligomer synthesized with the aforementioned synthesis method 1, a polycarbonate based oligomer (trade name: PX31-18, made by Asia Industry Co., Ltd.), a high-cis polybutadiene rubber (h-BR) based oligomer synthesized with the following synthesis method 5; an energy ray curable resin having silicon atom (siloxane repeating unit) (trade name : X22-2457, made by Shin-Etsu Chemical Co., Ltd.); and an energy ray curable resin having fluorine atom (trade name: Megafac 72K, made by DIC Corporation); and
(ii) use a
   2-methyl-1-(4-methylthiophenyl)-2-morpholinopropane-1-one (trade name: Irgacure.907, made by BASF) as the photo polymerization initiator, to prepare the second resin composition at the compounding amount as shown in the following Tables 1 and 2.

### <<Synthesis method 4>>

First, a polypropylene glycol (PPG) based diol(trade name:P-2000, made by ADEKA Corporation), an isophorone diisocyanate (IPDI) (made by Evonik Corporation), and a propylene glycol monomethyl ether acetate (PMA) (made by Sankyo Chemical Co.,Ltd.) as a solvent were mixed with a planetary mixer at 70°C for 10 minutes. Then, a tin catalyst (trade name: U-100, made by Nitto Kasei Co., Ltd.) was added by 0.1 w% with respect to the diol, and mixed at 70°C. After certifying per one hour that the theoretical peak area of isocyanate has been approached in infrared absorption (IR) spectrum, a 2-hydroxyethyl alcohol (HOA)(trade name: Light Ester HOA, made by Kyoeisha Chemical Co., Ltd.) was added. Further, after certifying that the peak of isocyanate in infrared absorption (IR) spectrum has disappeared, the synthesis was terminated.

Here, an "isocyanate index", which is an index calculated with [number of isocyanate groups (-NCO) in isocyanate group containing compound]/[number of (-OH) groups in polyol], was 1.8.

### <<Synthesis method 5>>

First, a butadiene based diol (trade name: GI-2000, made by Nippon Soda Co., Ltd.), a toluene diisocyanate (TDI) (trade name: T-80, made by BASF INOAC Polyurethanes Ltd.), and a propylene glycol monomethyl ether acetate (PMA) (made by Sankyo Chemical Co.,Ltd.) as a solvent were mixed with a planetary mixer at 70°C for 10 minutes. Then, a tin catalyst (trade name: U-100, made by Nitto Kasei Co., Ltd.) was added by 0.1 w% with respect to the diol, and mixed at 70°C. After certifying per one hour that the theoretical peak area of isocyanate has been approached in infrared absorption (IR) spectrum, a 2-hydroxyethyl alcohol (HOA)(trade name: Light Ester HOA, made by Kyoeisha Chemical Co., Ltd.) was added. Further, after certifying that the peak of isocyanate in infrared absorption (IR) spectrum has disappeared, the synthesis was terminated.

Here, an "isocyanate index", which is an index calculated with [number of isocyanate groups (-NCO) in isocyanate group containing compound]/[number of (-OH) groups in polyol], was 1.8.

### <Formation of laminate>

In Examples 1 to 14 and Comparative Examples 1 to 6, the first resin composition was rendered to flow into a Teflon plate having a concavity with a depth of 0.5 mm. Then, a polyethylene terephthalate film (PET film) and a Pyrex® glass with a thickness of 5 mm were used to cover the upper portion of the first resin composition. Then, by radiating an ultraviolet ray by using a D valve of a 6-inch UV lamp-conveyor system (made by FusionUV) to cure the first resin composition, the energy ray curable resin layer (1) was formed. Next, the formed energy ray curable resin layer (1) was placed on a Teflon® plate having a concavity with a depth of 1 mm, and the second resin composition was rendered to flow in. Then, a polyethylene terephthalate film (PET film) and a Pyrex glass with a thickness of 5 mm were used to cover the upper portion of the second resin composition. Then, by radiating an ultraviolet ray by using a D valve of a 6-inch UV lamp-conveyor system (made by FusionUV) to cure the second resin composition, the energy ray curable resin layer (2) was formed, to obtain a laminate. Here, the conveyor speed was 2 cm/sec. Moreover, the peak power of the radiated ultraviolet ray (365 nm) was 1584 mW/cm, and the integral of light was 1086 mJ/cm².

The adhesiveness of the obtained laminate between the energy ray curable resin layer (1) and the energy ray curable resin layer (2) was evaluated with the following adhesiveness test. The softness of the obtained laminate was evaluated with the following softness test. The result was as shown in Tables 1 and 2.

### <Adhesiveness test>

A 180° peel test was performed according to JIS C 6471. Here, the peeling rate was 50 mm/min. The "peeling force" is preferably 2 (N/cm) or more.

### <Softness test>

The hardness of the laminate was measured with a micro hardness meter (MD-1, made by Kobunshi Keiki Co., Ltd.). Here, the JIS-A hardness is preferably 70 or less.

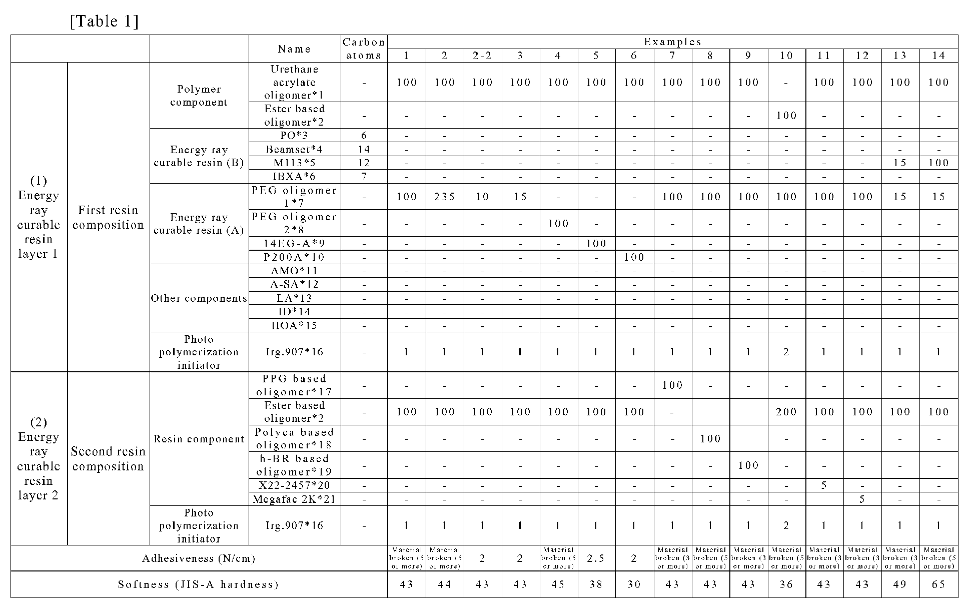

**[Table 2]**

| | | | Name | Carbon atoms | Comparative examples | | | | | |
|---|---|---|---|---|---|---|---|---|---|---|
| | | | | | 1 | 2 | 3 | 4 | 5 | 6 |
| (1) Energy ray curable resin layer 1 | First resin composition | Polymer component | Urethane acrylate oligomer*1 | - | 100 | 100 | 100 | 100 | 100 | 100 |
| | | | Ester based oligomer*2 | - | - | - | - | - | - | - |
| | | Energy ray curable resin (B) | PO*3 | 6 | - | - | - | - | - | - |
| | | | Beamset*4 | 14 | - | - | - | - | - | - |
| | | | M113*5 | 12 | - | - | - | - | - | 100 |
| | | | IBXA*6 | 7 | - | - | - | - | - | - |
| | | Energy ray curable resin (A) | PEG oligomer 1*7 | - | - | - | - | - | - | - |
| | | | PEG oligomer 2*8 | - | - | - | - | - | - | - |
| | | | 14EG-A*9 | - | - | - | - | - | - | - |
| | | | P200A*10 | - | - | - | - | - | - | - |
| | | Other components | AMO*11 | - | 100 | - | - | - | - | - |
| | | | A-SA*12 | - | - | 100 | - | - | - | - |
| | | | LA*13 | - | - | - | 100 | - | - | - |
| | | | ID*14 | - | - | - | - | 100 | - | - |
| | | | HOA*15 | - | - | - | - | - | 100 | - |
| | | Photo polymerization initiator | Irg.907*16 | - | 1 | 1 | 1 | 1 | 1 | 1 |
| (2) Energy ray curable resin layer 2 | Second resin composition | Resin component | PPG based oligomer*17 | - | - | - | - | - | - | - |
| | | | Ester based oligomer*2 | - | 100 | 100 | 100 | 100 | 100 | 100 |
| | | | Polyca based oligomer*18 | - | - | - | - | - | - | - |
| | | | h-BR based oligomer*19 | - | - | - | - | - | - | - |
| | | | X22-2457*20 | - | - | - | - | - | - | - |
| | | | Megafac 2K*21 | - | - | - | - | - | - | - |
| | | Photo polymerization initiator | Irg.907* 16 | - | 1 | 1 | 1 | 1 | 1 | 1 |
| Adhesiveness (N/cm) | | | | | 0.9 | 0.2 | 0.5 | 0.5 | 0.2 | Material broken (5 or more) |
| Softness (JIS-A hardness) | | | | | 80 | 40 | 28 | 30 | 40 | 72 |

| | | | | | | | | | | |
|---|---|---|---|---|---|---|---|---|---|---|
| *1 to *21 in Tables 1 and 2 are as follows. *1: trade name: NX44-31, made by Asia Industry Co., Ltd. *2: an oligomer synthesized with the aforementioned synthesis method 1 *3: the aforementioned structural formula (1): trade name: Light Ester PO, made by Kyoeisha Chemical Co., Ltd. *4: the aforementioned structural formula (2): trade name: Beamset 101, made by Arakawa Chemical Industries, Ltd. *5: the aforementioned general formula (3): trade name: M113, made by Toagosei Co., Ltd. *6: the aforementioned structural formula (3): trade name: Light Acrylate IBXA, made by Kyoeisha Chemical Co., Ltd. *7: an oligomer synthesized with the aforementioned synthesis method 2 *8: an oligomer synthesized with the aforementioned synthesis method 3 *9: the aforementioned general formula (1): trade name: Light Acrylate 14EG-A, made by Kyoeisha Chemical Co., Ltd. *10: the aforementioned general formula (2): trade name: Light Acrylate P200A, made by Kyoeisha Chemical Co., Ltd. *11: the aforementioned structural formula (4): acryloyl morpholine, trade name: AMO, made by Shin-nakamura Chemical Co., Ltd. *12: the aforementioned structural formula (5): trade name: A-SA, made by Shin-nakamura Chemical Co., Ltd. *13: the aforementioned structural formula (6): trade name: Light Acrylate LA, made by Kyoeisha Chemical Co., Ltd. *14: the aforementioned structural formula (7): trade name: Light Ester ID, made by Kyoeisha Chemical Co., Ltd. *15: the aforementioned structural formula (8): trade name: Light Ester HOA, made by Kyoeisha Chemical Co., Ltd. *16: trade name: Irgacure.907, made by BASF *17: an oligomer synthesized with the aforementioned synthesis method 4 *18: trade name: PX31-18, made by Asia Industry Co., Ltd. *19: an oligomer synthesized with the aforementioned synthesis method 5 *20: silicone compound: trade name: X-22-2457, made by Shin-Etsu Chemical Co., Ltd. *21: UV reactive surface modifier: trade name: Megafac RS-72-K, made by DIC Corporation | | | | | | | | | | |

According to Table 1 and Table 2, it is understood that as compared to Comparative Examples 1 to 6, which do not contain the energy ray curable resin (A) in which the first resin composition used in formation of the energy ray curable resin layer (1) has an ethylene oxide skeleton having two or more ethylene oxide repeating units, Examples 1 to 14, which contain the energy ray curable resin (A) in which the first resin composition used in formation of the energy ray curable resin layer (1) has an ethylene oxide skeleton having two or more ethylene oxide repeating units, are capable of obtaining a laminate with improved adhesiveness between the layers, and excellent softness.

### INDUSTRIAL APPLICABILITY

The laminate of this disclosure is preferably used in, e.g., conductive rollers such as charging roller, toner supply roller, developing roller, transfer roller, cleaning roller, fixing roller and the like.

The conductive roller of this disclosure is preferably used as charging roller, toner supply roller, developing roller, transfer roller, cleaning roller, fixing roller, etc.

### REFERENCE SIGNS LIST

- 1: laminate
- 2: substrate layer
- 3: first energy ray curable resin layer
- 4: second energy ray curable resin layer
- 5: shaft
- 6: elastic layer
- 7: intermediate layer (first energy ray curable resin layer)
- 8: outermost layer (second energy ray curable resin layer)
- 10: conductive roller

## Claims

1. A laminate comprising a substrate layer and at least 2 or more energy ray curable resin layers formed by curing a resin composition with an energy ray, wherein:
the laminate has an energy ray curable resin layer (1) which is formed on the substrate layer and an energy ray curable resin layer (2) which is formed on the energy ray curable resin layer (1); and
a first resin composition used in formation of the energy ray curable resin layer (1) contains an energy ray curable resin (A) having an ethylene oxide skeleton having two or more ethylene oxide repeating units, the energy ray curable resin (A) comprising at least one of a polyethylene glycol based oligomer, an acrylate represented by general formula (1), and an acrylate represented by general formula (2):

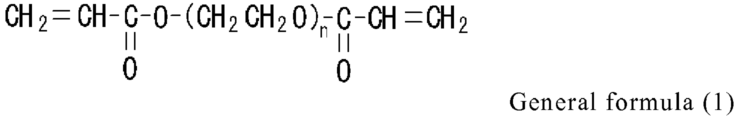

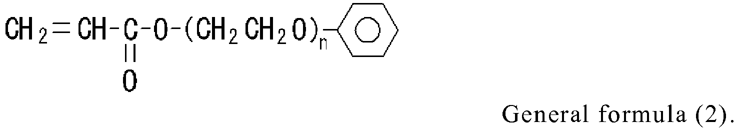

2. The laminate according to claim 1, wherein:
the first resin composition contains an energy ray curable resin (B) having a hydrocarbon ring skeleton.

3. The laminate according to claim 1 or 2, wherein:
the first resin composition further contains a polymer component; and
a content of the energy ray curable resin (A) in the first resin composition is 15 parts by mass or more per 100 parts by mass of the polymer component.

4. The laminate according to claim 2 or 3, wherein:
the first resin composition further contains a polymer component; and
a content of the energy ray curable resin (B) in the first resin composition is 100 parts by mass or less per 100 parts by mass of the polymer component.

5. The laminate according to any one of claims 1 to 4, wherein:
the energy ray curable resin layer (2) is an outermost layer; and
the second resin composition used in formation of the energy ray curable resin layer (2) contains at least either one among an energy ray curable resin having fluorine atom and an energy ray curable resin having silicon atom.

6. A conductive roller comprising the laminate according to any one of claims 1 to 5.

## Patentansprüche

1. Laminat, umfassend eine Substratschicht und mindestens zwei mit einem Energiestrahl härtbare Harzschichten oder mehr, die durch Härten einer Harzzusammensetzung mit einem Energiestrahl gebildet werden, wobei:
das Laminat eine mit einem Energiestrahl härtbare Harzschicht (1) aufweist, die auf der Substratschicht gebildet wird, und eine mit einem Energiestrahl härtbare Harzschicht (2) aufweist, die auf der mit einem Energiestrahl härtbaren Harzschicht (1) gebildet wird; und
eine erste Harzzusammensetzung, die zur Bildung der mit einem Energiestrahl härtbaren Harzschichten (1) verwendet wird, ein mit einem Energiestrahl härtbares Harz (A) enthält, das ein Ethylenoxid-Skelett aufweist, das zwei repetierende EthylenoxidEinheiten oder mehr aufweist, das mit einem Energiestrahl härtbare Harz (A), umfassend mindestens ein auf Polyethylenglykol basierendes Oligomer, ein Acrylat, dargestellt durch allgemeine Formel (1), sowie ein Acrylat, dargestellt durch allgemeine Formel (2):

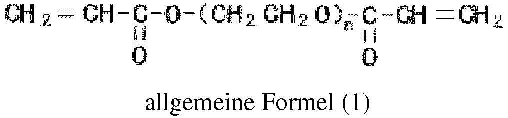

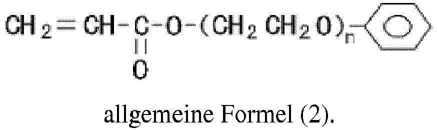

2. Laminat nach Anspruch 1, wobei:
die erste Harzzusammensetzung ein mit einem Energiestrahl härtbares Harz (B) ein Kohlenwasserstoffring-Skelett aufweist.

3. Laminat nach Anspruch 1 oder 2, wobei:
die erste Harzzusammensetzung ferner eine Polymerkomponente enthält; und
ein Gehalt des mit einem Energiestrahl härtbaren Harzes (A) in der ersten Harzzusammensetzung 15 Massenteile oder mehr pro 100 Massenteile der Polymerkomponente beträgt.

4. Laminat nach Anspruch 2 oder 3, wobei:
die erste Harzzusammensetzung ferner eine Polymerkomponente enthält; und
ein Gehalt des mit einem Energiestrahl härtbaren Harzes (B) in der ersten Harzzusammensetzung 100 Massenteile oder mehr pro 100 Massenteile der Polymerkomponente beträgt.

5. Laminat nach einem der Ansprüche 1 bis 4, wobei:
die mit einem Energiestrahl härtbare Harzschicht (2) eine äußerste Schicht ist; und
die zweite Harzzusammensetzung, die in der Bildung der mit einem Energiestrahl härtbaren Harzschicht (2) verwendet wird, sowohl mindestens eines von dem mit einem Energiestrahl härtbaren Harz, das ein Fluoratom aufweist, als auch dem mit einem Energiestrahl härtbaren Harz, das ein Siliciumatom aufweist, enthält.

6. Leitfähige Walze, umfassend das Laminat nach Anspruch 1 bis 5.

## Revendications

1. Stratifié comprenant une couche de substrat et au moins 2 couches de résine durcissable par rayon d'énergie ou plus, formées par le durcissement d'une composition de résine avec un rayon d'énergie, où:
le stratifié possède une couche de résine durcissable par rayon d'énergie (1) qui est formée sur la couche de substrat et une couche de résine durcissable par rayon d'énergie (2) qui est formée sur la couche de résine durcissable par rayon d'énergie (1); et
une première composition de résine utilisée dans la formation de la couche de résine durcissable par rayon d'énergie (1) contient une résine durcissable par rayon d'énergie (A) ayant un squelette d'oxyde d'éthylène avec deux unités de répétition d'oxyde d'éthylène ou plus, la résine durcissable par rayon d'énergie (A) comprenant au moins un parmi un oligomère à base de polyéthylène glycol, un acrylate représenté par la formule générale (1) et un acrylate représenté par la formule générale (2):

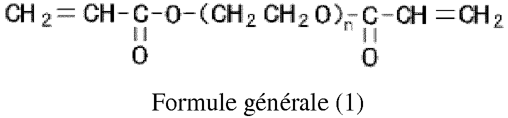

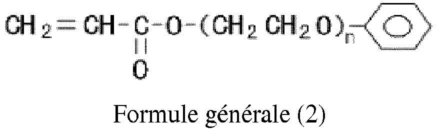

2. Stratifié selon la revendication 1, dans lequel:
la première composition de résine contient une résine durcissable par rayon d'énergie (B) ayant un squelette de cycle d'hydrocarbure.

3. Stratifié selon les revendications 1 ou 2, dans lequel:
la première composition de résine contient en outre un composant de polymère; et
la teneur en résine durcissable par rayon d'énergie (A) dans la première composition de résine est de 15 parties en masse ou plus pour 100 parties en masse du composant de polymère.

4. Stratifié selon les revendications 2 ou 3, dans lequel:
la première composition de résine contient en outre un composant de polymère; et
la teneur en résine durcissable par rayon d'énergie (B) dans la première composition de résine est de 100 parties en masse ou moins pour 100 parties en masse du composant de polymère.

5. Stratifié selon l'une quelconque des revendications 1 à 4, dans lequel:
la couche de résine durcissable par rayon d'énergie (2) est une couche le plus à l'extérieur; et
la deuxième composition de résine utilisée dans la formation de la couche de résine durcissable par rayon d'énergie (2) contient au moins l'un ou l'autre parmi une résine durcissable par rayon d'énergie possédant un atome de fluor et une résine durcissable par rayon d'énergie possédant un atome de silicium.

6. Rouleau conducteur comprenant le stratifié selon l'une quelconque des revendications 1 à 5.
